# EUROPÄISCHE PATENTSCHRIFT

(11) **EP 0 957 694 B1**
(45) Veröffentlichungstag und Bekanntmachung des Hinweises auf die Patenterteilung: **06.08.2003**
(21) Anmeldenummer: 98903993.8
(22) Anmeldetag: 05.01.1998
(51) Int. Cl.: A23L 2/38

(54) **SPORTGETRÄNK**
DRINK FOR SPORTSMEN
BOISSON POUR SPORTIFS

(30) Priorität: 07.01.1997 DE 19700241
(43) Veröffentlichungstag der Anmeldung: 24.11.1999
(73) Patentinhaber: Mineralbrunnen Rhön-Sprudel Egon Schindel GmbH, 36157 Ebersburg (DE)
(72) Erfinder: GEISS, Kurt-Reiner, D-64546 Mörfelden (DE); HAMM, Michael, D-20148 Hamburg (DE); SCHINDEL, Egon, D-36157 Ebersburg (DE)
(74) Vertreter: Schlagwein, Udo, Dipl.-Ing.
(86) Internationale Anmeldenummer: DE9800010
(87) Internationale Veröffentlichungsnummer: WO98030113

(56) Entgegenhaltungen:
- EP-A- 0 223 540
- EP-A- 0 259 167
- EP-A- 0 652 012
- WO-A-90/02494
- WO-A-91/12734
- WO-A-92/10947

## Beschreibung

Die Erfindung betrifft ein Sportgetränk mit einem hohen Gehalt an energieliefernden Kohlenhydraten zum Ausgleich von Glykogendepletion während einer körperlichen Belastung und essentiellen Nährstoffen, insbesondere Mineralstoffen, welches ein Kohlenhydratgemisch aus langsam resorbierbaren Kohlenhydraten und etwa die Hälfte kurz- bis mittelkettigen Glucosepolymeren mit einem Anteil eines schnellresobierbaren Kohlenhydrates aufweist.

Solche Sportgetränke sind derzeit bekannt und werden bei sportlicher Betätigung benutzt. Die in ihnen enthaltenen Kohlenhydrate können im Körper im Gegensatz zu Fetten sehr schnell zur Energiegewinnung herangezogen werden. Je höher die Leistungsintensität ist, desto größer ist der Kohlenhydratanteil an der Energiebereitstellung. Der Körper kann Kohlenhydrate in Form von Glykogen im Gegensatz zu Fetten nur begrenzt speichern. Da selbst bei einem Spitzenathleten in seinem Organismus höchstens 600 g Kohlenhydrate in der Leber und der Muskulatur gespeichert werden können, ist eine Zufuhr von Kohlenhydraten bei höheren sportlichen Belastungen notwendig. Geschieht das nicht, fällt der Blutzuckerspiegel ab und es kommt zu einer Minderung der Leistungsfähigkeit.

Eine hohe körperliche Belastung ist zugleich mit einem erhöhten Wasserverlust durch Schwitzen verbunden. Mit dem Wasser werden Mineralstoffe, wie zum Beispiel Natrium, Kalium und Chlorid, ausgeschieden. Fußballspieler können beispielsweise in einer Halbzeit über 3 Liter Schweiß abgeben, haben jedoch in der Spielpause nur 15 Minuten Zeit, den dadurch bedingten Flüssigkeitsverlust auszugleichen. Auch ein Flüssigkeits- und Mineralstoffverlust führt zu einer Minderung der körperlichen Leistungsfähigkeit. Es ist deshalb zusätzlich zur Energiebereitstellung bei sportlicher Belastung auch erforderlich, den Flüssigkeits- und Mineralstoffverlust möglichst rasch auszugleichen.

Mit dem Kohlenhydratgehalt eines Getränkes steigt seine Osmolalität. Cola enthält zum Beispiel etwa 110 g/l Zucker und hat eine Osmolalität von 1000 bis 1200 mOsmol/Liter. Wegen der osmotischen Wirkung kommt es durch ein solches energiehaltiges Getränk statt zu einem Flüssigkeitsausgleich zu einem Flüssigkeitsverlust der Körperzellen.

Um dem Körper zugleich Energie und Flüssigkeit zu liefern, wurden unter anderem isotonische Getränke entwickelt, die etwa 60 bis 70 g/l schnellresobierbare Kohlenhydrate enthalten und sich durch eine gleiche Osmolalität auszeichnen wie das Blut des Menschen. Es zeigte sich jedoch in der Praxis, dass bei Dauerbeanspruchung der Kohlenhydratanteil solcher Getränke nicht ausreicht, um die dabei auftretende Glykogendepletion auszugleichen und dass schon der relativ geringe Gehalt an Kohlenhydraten zu starken Blutzuckerschwankungen führt. Eine höhere Dosierung der Kohlenhydrate ist bei den bekannten Sportgetränken jedoch nicht möglich, weil dann die Isotonie verloren geht und die schnellresorbierbaren Kohlenhydrate zu extremen Blutzuckerschwankungen mit hormonellen Gegenreaktionen führen und dadurch die Leistungsfähigkeit mindern.

Die WO 92/10947 beschreibt ein Getränk zur präoperativen Verabreichung, welches 10 - 30% Monocaccharide, 10 - 30% Disaccharide und im übrigen Polysaccharide enthält und erwähnt ausdrücklich Maltose und Fructose.

Die EP-A-0 259 167 offenbart ein kohlenhydratreiches hypotonisches Sportgetränk, welches 115 g/l eines Kohlenhydratgemisches aus 65 g Saccharose, Fructose und Glucose und 50 g Dextrine enthält

Der Erfindung liegt das Problem zugrunde, ein hypotonisches bis schwach isotonisches Sportgetränk der eingangs genannten Art zu entwickeln, welches auch für eine längere sportliche Betätigung ausreichend Energie bereitstellt, ohne dass es dadurch zu einer Leistungsminderung durch Blutzuckerschwankungen kommt und welches trotz des hohen Energiegehaltes einen Flüssigkeitsersatz ermöglicht.

Dieses Problem wird erfindungsgemäß dadurch gelöst, dass ein Liter des Sportgetränkes etwa 120 g des Kohlenhydratgemisches und zusätzlich L(+)Milchsäure und bis zu 10 g/l L-Tyrosin enthält.

Ein solches Getränk ist trotz der insgesamt etwa doppelt so hohen Kohlenhydratkonzentration wie bei herkömmlichen isotonischen Getränken oder bei Apfelsaftschorlen überraschenderweise noch schwach isotonisch oder sogar hypotonisch. Es entzieht den Körperzellen deshalb kein Wasser, so dass es zu keiner Wasser-Netto-Adsorption in den Darm kommt. Die erfindungsgemäße Mischung aus langsam, mittelschnell und schnell resorbierbaren Kohlenhydraten führt dazu, dass zunächst aufgrund des schnellresorbierbaren Kohlenhydrates dem Körper sehr rasch eine begrenzte Energiemenge zugeführt wird. Die übrigen Kohlenhydrate werden wegen ihrer mittleren bis langen Ketten verzögert resorbiert, so dass es während der Belastung beim Sport zu einer gleichmäßigen Energiezufuhr ohne Überzuckerung des Blutes und ohne die Gefahr einer Dehydration kommt. Überraschenderweise werden durch die erfindungsgemäße Mischung von Kohlenhydraten auch die sonst bei hohen Kohlenhydratgehalten zu beobachtenden extremen Blutzuckerschwankungen vermieden.

Der Zusatz von L(+)Milchsäure führt zu einer besonders günstigen Wirkung auf die Muskeln eines Sportlers. Es konnte herausgefunden werden, dass durch einen solchen Zusatz durch die Pufferwirkung der schwachen Milchsäure die Übersäuerung der Muskeln hinausgezögert wird. Insbesondere Hobby- und Feizeitsportler konnten nach einem Genuss des erfindungsgemäßen Getränkes feststellen, dass entgegen der üblichen Erfahrung auch nach großer Belastung kein Muskelkater auftrat. Das L-Tyrosin wirkt aufgrund eines zentralnervösen Effekts auf den Menschen und führt zu einer Steigerung der Vigilanz und Motivation.

Als langsam resorbierbares Kohlenhydrat verwendet man vorteilhafterweise langkettige Glucosepolymere, vorzugsweise Maltodextrine.

Besonders vorteilhaft ist es, wenn das langsam resorbierbare Kohlenhydrat einen Anteil von Fruktose aufweist. Dieses Kohlenhydrat hat einen niedrigen glykämischen Index und wird im Gegensatz zu Glucose langsam resorbiert, obwohl es sich ebenfalls um ein Monosaccarid handelt. Fruktose ist für den Körper in den kleinen, in Frage kommenden Mengen gut verträglich und wird von ihm als Zuckeraustauschstoff verzögert aufgenommen und führt nicht zu einem überhöhten Blutzuckerspiegel.

Die Wirkung des Sportgetränkes ist besonders günstig, wenn die kurz- bis mittelkettigen Glucosepolymere in Form von getrocknetem Glukosesirup vorhanden sind. Ein solches Glucosepolymer kann beispielsweise aus Maisstärke durch saure Hydrolyse oder durch das Enzym- oder Säure-Enzym-Verfahren gewonnen werden und ist sehr kostengünstig erhältlich. Glucose führt genau wie andere Kohlenhydrate zu einem Anstieg des Blutzuckerspiegels. Dieser bleibt jedoch nach einem raschen Anstieg über längere Zeit konstant bei einem Blutzuckerspiegel von 100 bis 110 mg/%, wenn der Glucoseanteil dem des erfindungsgemäßen Getränkes entspricht. Somit ergibt sich ein über längere Zeit konstanter "Substratdruck" auf die Muskelzellen und damit im Vergleich zu anderen, schnellresorbierbaren Kohlenhydraten zu einer länger anhaltenden Bereitstellung von Energie.

Als schnellresorbierbare Kohlenhydrate kommen vorzugsweise das Monosaccarid Glucose und/oder Maltose in Frage. Diese Bestandteile können in dem Getränk durch den getrockneten Glukosesirup enthalten sein.

Bei dem L-Tyrosinzusatz kann man auf ein als Lebensmittelzusatzstoff zugelassenes Produkt zurückgreifen, wenn L-Tyrosin als L-tyrosinhaltiges Melasse-Extrakt zugesetzt ist.

Besonders kostengünstig ist der L-Tyrosinzusatz erhältlich, wenn hierfür synthetisches L-Tyrosin verwendet wird.

Fahrradergometrisch getestet und im Vergleich zu anderen isotonischen Sportgetränken als besonders wirkungsvoll erwies sich das erfindungsgemäße Sportgetränk, wenn es 54 g/l getrockneten Glukosesirup, 60 g/l Maltodextrine, 6 g/l Fruktose, 4 g/l L-tyrosinhaltiges Melasse-Extrakt und 1 g/l L(+)Milchsäure enthält.

Insgesamt vermag das Sportgetränk den bei erhöhter Belastung eines Sportlers auftretenden erhöhten Bedarf an energiespendenden und an essentiellen Nahrungsmitteln optimal zu befriedigen, ohne die Leistungsfähigkeit mindernde Nebenwirkungen zu zeigen, wenn es zusätzlich die Mineralstoffe

| | |
|---|---|
| Kalium | 400 mg/l |
| Calcium | 100 mg/l |
| Natrium | 600 mg/l |
| Magnesium | 200 mg/l |

und die Vitamine

| | |
|---|---|
| Vitamin C | 90,00 mg/l |
| Niacin | 27,00 mg/l |
| Pantothenat | 9,00 mg/l |
| Vitamin B1 | 0,50 mg/l |
| Vitamin B2 | 0,40 mg/l |

enthält. Bei einem solchen Sportgetränk liegt die Natriumkonzentration noch in einem Bereich, der für eine schnelle Magenentleerungsrate günstig ist. Die Kaliumdosierung führt zu einem günstigen Effekt des Sportgetränkes in der Regenerationsphase bei der Glucoseresynthese und sorgt deshalb für ein rasches Wiederauffüllen der Glykogendepots. Der Magnesiumgehalt sorgt für eine Aktivierung der Enzyme des Kohlenhydrat-, Fett- und Eiweißstoffwechsels und fördert die neuro-muskuläre Koordinationsfähigkeit. Auch die Vitamine, insbesondere. Vitamin B1 und B2 fördern den optimalen Energiestoffwechsel während der Belastung.

Die erfindungsgemäße Dosierung und Mischung der Mineralstoffe verbessert die körperliche Leistungsfähigkeit und vermeidet zu hohe Elektrolytkonzentrationen, welche zu einem "Substratdruck" auf die Nieren führen und dadurch eine vermehrte Ausscheidung von Natrium, Kalium, Chlorid und Wasser bewirken. Die Milchsäure führt als schwache Säure zu einer Verbesserung der Pufferkapazität und wirkt deshalb einer belastungsbedingten Übersäuerung entgegen. Versuche zeigten, dass nach einem Genuss des erfindungsgemäßen Getränkes eine wesentlich längere Belastungsdauer möglich wird.

## Patentansprüche

1. Sportgetränk mit einem hohen Gehalt an energieliefernden Kohlenhydraten zum Ausgleich von Glykogendepletion während einer körperlichen Belastung und essentiellen Nährstoffen, insbesondere Mineralstoffen, welches ein Kohlenhydratgemisch aus langsam resorbierbaren Kohlenhydraten und etwa die Hälfte kurz- bis mittelkettigen Glucosepolymeren mit einem Anteil eines schnellresobierbaren Kohlenhydrates aufweist, **dadurch gekennzeichnet, dass** ein Liter des Sportgetränkes etwa 120 g des Kohlenhydratgemisches und zusätzlich L(+)Milchsäure und L-Tyrosin enthält, wobei L- Tyrosin bis 10 g/l zugesetzt wird.

2. Sportgetränk nach Anspruch 1, **dadurch gekennzeichnet, dass** es als langsam resorbierbare Kohlenhydrate langkettige Glucosepolymere enthält.

3. Sportgetränk nach Anspruch 2, **dadurch gekennzeichnet, dass** als langkettige, langsam resorbierbare Glucosepolymere Maltodextrine dienen.

4. Sportgetränk nach zumindest einem der vorangehenden Ansprüche, **dadurch gekennzeichnet, dass** das langsam resorbierbare Kohlenhydrat einen Anteil von Fruktose aufweist.

5. Sportgetränk nach zumindest einem der vorangehenden Ansprüche, **dadurch gekennzeichnet, dass** die kurz- bis mittelkettigen Glucosepolymere in Form von getrocknetem Glukosesirup vorhanden sind.

6. Sportgetränk nach zumindest einem der vorangehenden Ansprüche, **dadurch gekennzeichnet, dass** es als schnellresorbierbares Kohlenhydrat Glucose und/oder Maltose enthält.

7. Sportgetränk nach zumindest einem der vorangehenden Ansprüche, **dadurch gekennzeichnet, dass** das L-Tyrosin als L-tyrosinhaltiges Melasse-Extrakt zugesetzt ist.

8. Sportgetränk nach zumindest einem der vorangehenden Ansprüche, **dadurch gekennzeichnet, dass** das L-Tyrosin synthetisches L-Tyrosin ist.

9. Sportgetränk nach Anspruch 8, **dadurch gekennzeichnet, dass** es 54 g/l getrockneter Glukosesirup, 60 g/l Maltodextrine, 6 g/l Fruktose, 4 g/l L-tyrosinhaltiges Melasse-Extrakt und 1 g/l L(+)Milchsäure enthält.

10. Sportgetränk nach zumindest einem der vorangehenden Ansprüche, **dadurch gekennzeichnet, dass** es zusätzlich die Mineralstoffe
| | |
|---|---|
| Kalium | 400 mg/l |
| Calcium | 100 mg/l |
| Natrium | 600 mg/l |
| Magnesium | 200 mg/l |
und die Vitamine
| | |
|---|---|
| Vitamin C | 90 mg/l |
| Niacin | 27 mg/l |
| Pantothenat | 9 mg/l |
| Vitamin B1 | 0,5 mg/l |
| Vitamin B2 | 0,4 mg/l |
enthält.

## Claims

1. Sports drink with a high content of energy-supplying carbohydrates to compensate for glycogen depletion during physical strain, and of essential nutrients, particularly minerals, which comprises a carbohydrate mixture of slowly reabsorbable carbohydrates and approximately half of short- to medium-chain glucose polymers with a rapidly reabsorbable carbohydrate content, **characterized in that** a litre of the sports drink contains approximately 120 g of the carbohydrate mixture and additionally L(+)lactic acid and L-tyrosine, the amount of added L-tyrosine being up to 10 g/l.

2. Sports drink according to Claim 1, **characterized in that** it contains long-chain glucose polymers as slowly reabsorbable carbohydrates.

3. Sports drink according to Claim 2, **characterized in that** maltodextrins serve as long-chain, slowly reabsorbable glucose polymers.

4. Sports drink according to at least one of the preceding claims, **characterized in that** the slowly reabsorbable carbohydrate contains a proportion of fructose.

5. Sports drink according to at least one of the preceding claims, **characterized in that** the short- to medium-chain glucose polymers are present in the form of dried glucose syrup.

6. Sports drink according to at least one of the preceding claims, **characterized in that** it contains glucose and/or maltose as rapidly reabsorbable carbohydrate.

7. Sports drink according to at least one of the preceding claims, **characterized in that** the L-tyrosine is added in the form of extract of molasses with an L-tyrosine content.

8. Sports drink according to at least one of the preceding claims, **characterized in that** the L-tyrosine is synthetic L-tyrosine.

9. Sports drink according to Claim 8, **characterized in that** it contains 54 g/l of dried glucose syrup, 60 g/l of maltodextrins, 6 g/l of fructose, 4 g/l of extract of molasses with L-tyrosine content, and 1 g/l of L(+)lactic acid.

10. Sports drink according to at least one of the preceding claims, **characterized in that** it additionally contains the minerals
| | |
|---|---|
| Potassium | 400 mg/l |
| Calcium | 100 mg/l |
| Sodium | 600 mg/l |
| Magnesium | 200 mg/l |
and the vitamins
| | |
|---|---|
| Vitamin C | 90 mg/l |
| Niacin 27 | mg/l |
| Pantothenate | 9 mg/l |
| Vitamin B1 | 0.5 mg/l |
| Vitamin B2 | 0.4 mg/l. |

## Revendications

1. Boisson sportive présentant une teneur élevée en hydrates de carbone énergétiques pour compenser la déplétion de glycogène pendant une sollicitation corporelle et en éléments nutritifs essentiels, en particulier des substances minérales, qui présente un mélange d'hydrates de carbone à assimilation lente et environ la moitié des polymères de glucose à chaîne courte à moyenne avec une proportion d'hydrates de carbone à assimilation rapide, **caractérisée en ce qu'**un litre de la boisson sportive contient environ 120 g du mélange d'hydrates de carbone et, de plus, de l'acide L(+)-lactique et de la L-tyrosine, la L-tyrosine étant ajoutée jusqu'à 10 g/l.

2. Boisson sportive selon la revendication 1, **caractérisée en ce qu'**elle contient comme hydrates de carbone à assimilation lente des polymères de glucose à longue chaîne.

3. Boisson sportive selon la revendication 2, **caractérisée en ce que** la maltodextrine sert de polymères de glucose à longue chaîne, à assimilation lente.

4. Boisson sportive selon au moins l'une quelconque des revendications précédentes, **caractérisée en ce que** l'hydrate de carbone à assimilation lente présente une proportion de fructose.

5. Boisson sportive selon au moins l'une quelconque des revendications précédentes, **caractérisée en ce que** les polymères de glucose à chaîne courte à moyenne sont présents sous forme d'un sirop de glucose séché.

6. Boisson sportive selon au moins l'une quelconque des revendications précédentes, **caractérisée en ce qu'**elle contient du glucose et/ou du maltose comme hydrate de carbone à assimilation rapide.

7. Boisson sportive selon au moins l'une quelconque des revendications précédentes, **caractérisée en ce que** la L-tyrosine est ajoutée sous forme d'extrait de mélasse contenant de la L-tyrosine.

8. Boisson sportive selon au moins l'une quelconque des revendications précédentes, **caractérisée en ce que** la L-tyrosine est de la L-tyrosine synthétique.

9. Boisson sportive selon la revendication 8, **caractérisée en ce qu'**elle contient 54 g/l de sirop de glucose séché, 60 g/l de maltodextrine, 6 g/l de fructose, 4 g/l d'extrait de mélasse contenant de la L-tyrosine et 1 g/l d'acide L(+)-lactique.

10. Boisson sportive selon au moins l'une quelconque des revendications précédentes, **caractérisée en ce qu'**elle contient en outre les substances minérales
| | |
|---|---|
| Potassium | 400 mg/l |
| Calcium | 100 mg/l |
| Sodium | 600 mg/l |
| Magnésium | 200 mg/l |
et les vitamines
| | |
|---|---|
| Vitamine C | 90 mg/l |
| Niacine | 27 mg/l |
| Pantothénate | 9 mg/l |
| Vitamine B1 | 0,5 mg/l |
| Vitamine B2 | 0,4 mg/l |
